(19)

Europäisches
Patentamt

European
Patent Office

Office européen
des brevets

(11)  EP 2 678 673 B1

(12)  **EUROPEAN PATENT SPECIFICATION**

(45) Date of publication and mention
of the grant of the patent:
**08.06.2016  Bulletin 2016/23**

(21) Application number: **11813715.7**

(22) Date of filing: **25.11.2011**

(51) Int Cl.:
*G01N 31/22* (2006.01)          *G01N 21/78* (2006.01)
*G01N 21/64* (2006.01)

(86) International application number:
**PCT/SI2011/000068**

(87) International publication number:
**WO 2012/071019 (31.05.2012 Gazette 2012/22)**

(54) **Sol-gel based opto-chemical sensor for detection of diethyl chlorophosphate and method for its prepration**

Opto-chemischer Sol-Gel Sensor zum Nachweis von Diethyl-Chlorophosphat und Verfahren zu dessen Herstellung

Capteur opto-chimique à base de sol-gel pour la détection de diethyl chlorophosphate et son procédé de préparation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.11.2010  SI 201000405 P**

(43) Date of publication of application:
**01.01.2014  Bulletin 2014/01**

(73) Proprietor: **IOS, Institut za okoljevarstvo in senzorje, d.o.o.**
**2000 Maribor (SI)**

(72) Inventors:
• **LOBNIK, Aleksandra**
  **2311 Hoce (SI)**
• **KORENT, Urek Spela**
  **2310 Slovenska Bistrica (SI)**

(74) Representative: **Flak, Antonija**
**Patentni biro AF d.o.o.,**
**Kotnikova 32 p.p. 2706**
**1001 Ljubljana (SI)**

(56) References cited:
**WO-A1-2009/011674      US-A- 4 330 153**

• **PELA KORENT UREK ET AL: "Fluorescence-based optical chemical sensors for personal protection", PROCEEDINGS OF SPIE, 1 January 2010 (2010-01-01), pages 76651O-76651O-8, XP55025761, ISSN: 0277-786X, DOI: 10.1117/12.852749**
• **KOBAYASHI Y ET AL: "Preparation of a transparent alumina film doped with fluorescence dye and its energy transfer laser emission", THIN SOLID FILMS, ELSEVIER-SEQUOIA S.A. LAUSANNE, CH, vol. 200, no. 2, 15 May 1991 (1991-05-15), pages 321-327, XP024547357, ISSN: 0040-6090, DOI: 10.1016/0040-6090(91)90204-B [retrieved on 1991-05-15]**
• **PALIWAL ET AL: "Fluorescence-based sensing of p-nitrophenol and p-nitrophenyl substituent organophosphates", ANALYTICA CHIMICA ACTA, ELSEVIER, AMSTERDAM, NL, vol. 596, no. 1, 3 July 2007 (2007-07-03), pages 9-15, XP022138761, ISSN: 0003-2670, DOI: 10.1016/J.ACA.2007.05.034**

**Description**

Technical area

The subject of the invention covers the area of optical chemical sensors, which are sensitive to diethyl chlorophosphate.

Technical problem

The technical problem is the method of manufacture and design of optical chemical sensor, in which the interaction between the analyte and the indicator allows quick and reliable spectrofluorimetric measurement of organophosphates. The interaction is reflected in the optical properties of the indicator, which shows the change in its fluorescence intensity. The task of the invention is also a modification of the method for the preparation of sensor membranes, which will enable the preparation of a sensor membrane that will be transparent, without cracks, permeable for the analyte, from which there will be no leaching of the indicator and no deactivation of the indicator after its immobilization.

Due to the increasing environmental burden with various noxious chemicals there is an increasing need for simple and effective monitoring of the environment. For the determination of pollutants the instrumental methods are largely used. These procedures require long pre-treatment times and expensive apparatus, qualified personnel and do not allow continuous monitoring or use in remote locations. A suitable alternative to the above instrumental methods are chemical sensors, if they achieve sufficient selectivity and sensitivity. Besides, they allow the measurement be performed on site ("in situ") and give results within a short time. These systems allow real time control of discharges of pollutants and, simultaneously, reduce the cost of the process of environmental monitoring.

Organophosphates are chemically esters of phosphoric acid and its derivatives. Organophosphates are used as pesticides (phosphamidon, dicrotophos, methamidophos, chlorpyrifos, diazinon, malathion) and as nerve poisons (sarin, soman, tabun, VX). Some less toxic organophosphates are used as solvents, plasticizers and as additives in extreme pressure in the engines. Biologically functioning organophosphates are cholinesterase inhibitors. The use of organophosphate pesticides has greatly increased, mainly due to the abolition of persistent organochlorinated pesticides. Despite the fact that organophosphate pesticides degrade relatively rapidly in the presence of sunlight, air and soil, small amounts of these pesticides are still moving in the food and drinking water. According to the World Health Organization (WHO) on average each year 3 million people poison with organophosphate, of whom around 220,000 die. Because of their toxicity and their increasingly frequent occurrence in our environment, the need to develop simple and rapid sensor system for "in-situ" determination of organophosphates in low concentrations is necessary.

State of the art

Chemical sensors as scale down analytical devices are known, which provide continuous and reversible information on the chemical concentration. The sensor is typically composed of receptor for the analyte recognition and of a conversion element, which is connected to the display and shows the presence of the analyte. Given the nature of the converter, chemical sensors can be divided into optical, electrochemical, electrical, magnetic and termometric.

The receptor function is in most cases performed by a thin film that can react with the analyte molecules, catalyze selective reactions or participate in chemical equilibrium with the analyte. In the case of optical chemical sensors the result of interactions between receptor and analyte is the change in the receptor optical properties, such as absorption, luminescence and reflection. The task of the converter is to convert the optical response of the receptor into a measurable signal, for example voltage and/or stream.

In the patent applications US2002102629, WO02079763 and US2002142472 biosensors for determination of organophosphates, where green algae and cyanobacteria were used as indicators are described. Sensing principle is based on the measurement of organophosphates quantum efficiency changes.

The file patent US2010227766 describes the preparation and determination of organophosphates with sensors prepared from a carboxylic aminofluorescein immobilized on functionalized polymeric microspheres covered with poly (2 - vinilpiridinom).

In the European Patent No. 0585212 B1, the preparation of sensor membranes from different polymers, cellulose, ethyl acetate and polystyrene is described.

In the Slovenian Patent No. 21110 the method and an optical sensor for continuous measurement of dissolved hydrogen peroxide, with an emphasis on the sol-gel membranes in sensing purposes is described.

Fluorescence-based optical chemical sensors for personal protection are known from the article by Korent Urek et al (Proceedings of SPIE, 2010). The preparation of optical chemical sensors having a sol-gel membrane, which is described in this article differs from the present invention.

Fluorescence-based sensing of p-nitrophenol and p-nitrophenyl substituent organophosphates has also been described by Paliwal et al (Analytica Chimica Acta, 2007). In this article it is proposed that the phosphonates are analysed by sensing of their degradation products, which can be done by using coumarin 1. However, the authors state that a direct color change is not produced upon interaction of coumarin 1 and the organophosphate.

Description of technical problem solution

The present invention relates to a sensor for detecting diethyl phosphate and to method for manufacturing said sensor. The sensor active part is a sol-gel membrane, in which the indicator 7-diethylamino-4-methylcoumarin is immobilized. The sol-gel material of the sensor of the invention is based on a combination of alkoxysilane tetraethylorthosilicate and an organically modified siloxane methyltriethoxysilane. The reaction of the indicator, immobilized in sol-gel membrane, with diethyl chlorophosphate (DCP) organophosphate is reflected in the optical changes that are detected as a change in fluorescence intensity as a function of analyte concentration. The optical change is monitored by the photodetector. Manufacturing process and design of optical chemical sensor with sol-gel membrane for detection of organophosphates will be described below in more detail through pictures, which show:

Figure 1 - sol-gel membrane sensor manufacturing process
Figure 2 - dependence of the sensor membrane fluorescence intensity of organophosphate concentrations

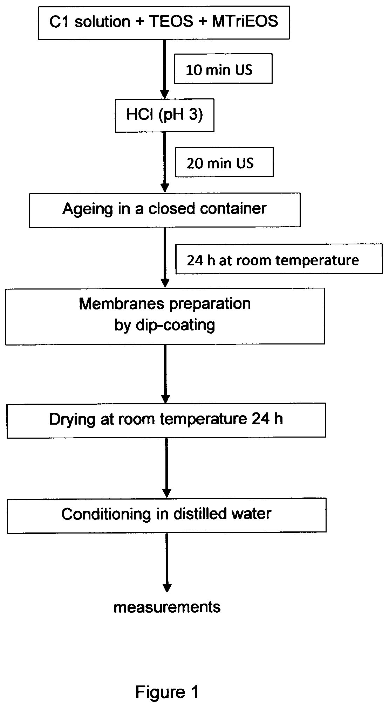

The active part of the optical chemical sensor with sol-gel membrane for detection of organophosphates is a thin membrane in which is immobilized the indicator 7-diethylamino-4-methylcoumarin.
As an indicator polymeric carrier the sol-gel material was selected, which is hydrophobic by its nature, and is chemically, photo-chemically, thermally and mechanically stable, so it can also be used in more severe conditions. Is optically transparent up to 250 nm and have low own fluorescence. Its swelling in organic and aqueous solutions is negligible. By controlling of process parameters, such as pH, type and concentration of the sol-gel precursor, the amount of water, drying conditions, type of solvent in combination with aging sol and sol-gel material the microporosity and polarity of the sol-gel can be influenced. As precursurs to produce membranes, in addition to alkoxysilane tetraethylorthosilicate we selected organic modified siloxane methyltriethoxysilane, which reduces the number of surface silanol groups and increases gels flexibility and lowers the level of crosslinking. For the indicator, we chose 7-diethylamino-4-methylcoumarin, because it showed good sensitivity to the analyte in the lower concentration range from 10 nM to 100 nM, it is photostabile and commercially available.
To identify organophosphates primarily fluorescent indicators, such as phenylpyridine dyes, antrazine bisimide dyes, aminoflurescein, pyrene dyes, lanthanide complexes and coumarin dyes are used. Absorption indicators, such as, nitrophenylamine derivatives are less used. The overall reaction mechanism, which is exploited by the chemical sensors for the detection of organophosphates, mimics the chemical reactions of acetylcholinesterase inhibition with organophosphate. It involves a reaction between the nucleophilic indicator and the electrophilic organophosphate analyte. The reaction product is the phosphate ester, which causes a change in fluorescence. For the invention for an optical chemical sensor a coumarin dye 7-diethylamino-4-methylcoumarin was chosen. The interaction with the analyte changes the optical properties of the dye, through which the indirect measure of the concentration of the analyte is possible. The dye has a high quantum efficiency, good photostability and is commercially available.
For the preparation of stable transparent membranes, we studied the sol-gel solution with different tetraethylorthosilicate and methyltriethoxysilane molar ratios (1:0, 9:1, 4:1, 3:1, 1:1, 1:3, 1:4, 1:9, 0:1). We also studied the effect of Triton X, which is an anionic surfactant, molar ratios between ethanol and precursors (10:1, 20:1, 30:1, 40:1), molar ratios between water and precursors (4:1, 15:1), sol ageing time (1, 2, 6, 10, 30 days), drying conditions (at room temperature, in desiccator with silica gel, at 70 °C for 4 h and time of solution mixing (20 and 40 min in the ultrasonic bath (US)) on the sol-gel membrane quality. Stable and transparent membranes were obtained by using the molar ratio between water and precursor 4:1, molar ratio between tetraethylorthosilicate and methyltriethoxysilane 1:1 and molar ratio between solvent (ethanol) and precursors 40:1, therefore these conditions were used for further research.
The creation of an optical chemical sensor with sol-gel membrane for detection of organophosphates is shown in Figure 1 and begins with the preparation of the membrane so that to the $10^{-7}$ M 7-diethylamino-4-methylcoumarin etanol solution, is added to tetraethoxysilane and methyltriethoxysilane and stirred in an ultrasonic bath for 10 minutes. Then the catalyst 0.001 M HCl is added to the solution and again mixed in an ultrasonic bath for 20 minutes. As a solid supports, glass slides were used, which were previously activated by soaking in concentrated nitric (V) acid for 24 hours, rinsing with distilled water and ethanol and drying for 3 hours at 100 °C. The sol was aged for 24 hours in closed containers at room temperature prior to the preparation of sensor membranes. The sensor membranes are prepared by manually dipping the previously activated glass slides into the sol and slowly pulled out from it. The membranes are let to dry for 24 hours at room temperature. Before drying the coating is wiped from the one side of glass slide so that the initial fluorescence signal is higher. This is very important for sensor characteristics. If the coating is on both sides then the fluorescence intensity is lower. This is followed by 24 hours of sol aging and 24 hours drying, followed by conditioning in distilled water for at least 3 hours before taking measurements.

Reaction of indicator, immobilized in sol-gel membrane, with organophosphate (DCP) is reflected in the optical changes as a change in fluorescence intensity as a function of analyte concentration. Fluorescence was measured on a Perkin Elmer LS 55 spectrofluorometer, which has a xenon lamp light source. For measurements the membranes on slides size 12.8 $\times$ 38 mm square were placed diagonally in a quartz cuvette. During the course of the measurements the membranes were not taken out from the cuvette, but solutions of defined analyte concentrations were added or removed using a syringe.

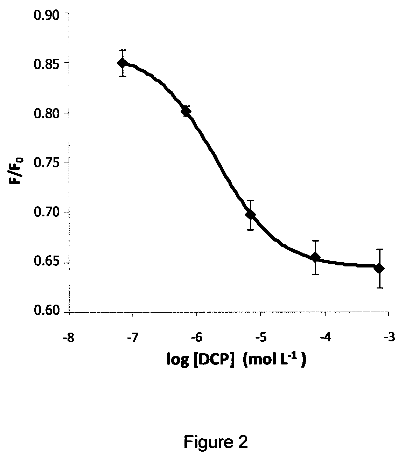

The graph in Figure 2 shows the dependence of the fluorescence of the indicator immobilized in sol-gel membrane on the concentration of diethyl chlorophosphate (DCP). $F/F_0$ represents the ratio of emission intensity in the presence of defined concentrations of the analyte (F) and emission intensity in the absence of analyte ($F_0$). The relation between analyte concentration and fluorescence intensity can be described by Boltzmann equation:

$$y = \frac{0{,}86 - 0{,}6443}{1 + e^{\frac{(x+5{,}685)}{0{,}4849}}} + 0{,}6443 \; .$$

The correlation coefficient is 0.9909 in this case. The sensor membrane limit of detection is 0.69 $\mu$M. A linear calibration curve concentration range is between 187 nM and 22.8 $\mu$M DCP. The response time is 600 s.

Table 1 lists the amount of reagents for the preparation of sensor membranes for the invention.

Tabela 1:

| Methyltriethoxysilane [mmol] | Tetraethylorthosilicate [mmol] | Catalyst 0.001 M HCl [mol] | 7-diethylamino-4-methylcoumarin $10^{-7}$ M [mol] |
|---|---|---|---|
| 6.8 | 6.8 | $1 \times 10^{-6}$ | $8.2 \times 10^{-9}$ |

The procedure for the preparation of optical chemical sensors is realized in a simple preparation of sensor membranes with indicator immobilization in a $SiO_2$ sol-gel polymer-based material, where the sensor response to organophosphate was determined by measuring the fluorescence intensity and has the limit of detection of 0.69 $\mu$M and a linear concentration range between 187 nM and 22.8 $\mu$M DCP.

## Claims

1. The procedure for preparation of an optical chemical sensor r with a sol-gel membrane for detection of diethyl chlorophosphate comprising the steps:

   dissolving an indicator compound;
   adding tetraethoxysilane and methyltriethoxysilane ; stirring in an ultrasonic bath for 10 minutes; adding the 0.001 M HCl catalyst solution ; mixing in an ultrasonic bath for 20 minutes; aging the solution in a closed container at room temperature for 24 hours; dipping the slide into the solution and letting the coated slides to dry for 24 hours at room temperature to form a membrane, **characterized in that** the indicator is $10^{-7}$ M ethanol solution of 7-diethylamino-4-methylcoumarin and that the procedure further comprises an additional step before drying in which the coating on one side of the slide is wiped.

2. An optical chemical sensor with sol-gel membrane for detection of diethyl chlorophosphate obtained by the procedure defined in claim 1.

## Patentansprüche

1. Verfahren zur Herstellung eines optischen chemischen Sensors mit Sol-Gel-Membran zum Nachweis von Diethylchlorphosphat umfassend die Schritte:

   Auflösung einer Indikatorverbindung; Zugabe von Tetraethoxysilan und Methyltriethoxysilan; Rühren in einem Ultraschallbad für 10 Minuten; Hinzufügen einer 0,001 M HCl Katalysatorlösung; Rühren in einem Ultraschallbad für 20 Minuten; Alterung der Lösung in einem geschlossenen Behälter bei Raumtemperatur für 24 Stunden;

Eintauchen des Schiebers in die Lösung und Trocknung der beschichteten Schieber für 24 Stunden bei Raumtemperatur zur Bildung einer Membran, **dadurch gekennzeichnet, dass** der Indikator eine $10^{-7}$ M Ethanollösung von 7-Diethylamino-4-methylcumarin ist und dass das Verfahren des Weiteren einen weiteren Schritt vor der Trocknung umfasst, in welchem die Beschichtung an einer Seite des Schiebers abgewischt wird.

**2.** Optisch-chemischer Sensor mit Sol-Gel-Membran zum Nachweis von dem nach dem Verfahren nach Anspruch 1 erhaltenen Diethylchlorphosphat.

**Revendications**

**1.** Un procédé pour la préparation d'un capteur optique chimique avec une membrane sol-gel pour la détection de diéthyl chlorophosphate consistant à:

dissoudre un composé indicateur; ajouter du tétraéthoxysilane et du méthyltriéthoxysilane; agiter dans un bain ultrasonique pendant 10 minutes; ajouter ensuite la solution de catalyseur HCl 0,001 M; mélanger dans un bain ultrasonique pendant 20 minutes; vieillir la solution dans un récipient clos à température ambiante pour 24 heures; tremper la glissière dans la solution et laisser les glissières trempées à sécher pendant 24 heures à température ambiante pour former une membrane, **caractérisé en ce que** l'indicateur est une solution éthanolique de 7-diéthylamino-4-méthylcoumarine à $10^{-7}$ M et **en ce que** le procédé comprend en outre une étape supplémentaire avant le séchage, dans laquelle le revêtement d'un côté de la glissière est essuyé.

**2.** Un capteur optique chimique avec une membrane sol-gel pour la détection de diéthyl chlorophosphate obtenu par le procédé comme défini dans la revendication 1.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002102629 A
- WO 02079763 A
- US 2002142472 A
- US 2010227766 A
- EP 0585212 B1
- SI 21110

**Non-patent literature cited in the description**

- **KORENT UREK et al.** *Proceedings of SPIE,* 2010
- **PALIWAL et al.** *Analytica Chimica Acta,* 2007